# EUROPEAN PATENT SPECIFICATION

(11) **EP 1 447 495 B1**
(45) Date of publication and mention of the grant of the patent: **09.05.2007**
(21) Application number: 04447031.8
(22) Date of filing: 10.02.2004
(51) Int. Cl.: E04F 15/12, E04F 15/18, B29C 44/12, B32B 5/20, B32B 13/12, B32B 27/40

(54) **Method for producing a floor**
Herstellungsverfahren für Böden
Procédé de réalisation d'un sol

(30) Priority: 14.02.2003 BE 200300102
(43) Date of publication of application: 18.08.2004
(73) Proprietor: Van de Velde, Carlos, 9830 Sint Martens Latem (BE)
(72) Inventor: Van de Velde, Carlos, 9830 Sint Martens Latem (BE)
(74) Representative: Van Reet, Joseph

(56) References cited:
- EP-A- 0 239 396
- DE-A- 2 657 379
- GB-A- 2 306 183

## Description

The present invention relates to a method for producing a floor, in which a polyurethane reaction mixture is sprayed onto a base in order to form a polyurethane foam layer, and a covering floor is laid on this polyurethane foam layer, which covering floor comprises a screed that is laid on the polyurethane foam layer and that is made of at least sand and cement.

Such a method is already being used in practice. The polyurethane foam is sprayed onto a concrete base in order to form heat insulation underneath the covering floor. This covering floor generally consists of a lightweight concrete screed with the actual floor on top of it. In practice, the reaction mixture for the polyurethane foam layer is formulated in such a way that a hard closed-cell foam layer is obtained. Such a foam layer has, for example, a closed cell content of over 90% and a coefficient of thermal conduction or λ value, measured in accordance with the standards EN 1946-3 and EN 12667, which is less than 0.025W/mK.

The disadvantage of such a hard polyurethane foam layer is that, whilst it can provide good heat insulation, the sound insulation leaves something to be desired, in particular the insulation against impact sounds. Such sounds occur, for example, when furniture is being moved or when someone is walking or jumping on the floor, and can lead to a great deal of nuisance in blocks of flats in particular.

To address this problem, DE 26 57 379 A 1, which constitutes the closest prior art, discloses a similar method in which the sprayed polyurethane foam layer is open-celled instead. DE 26 57 379 A 1 discloses to apply first 1 to 3 cm thick polystyrene foam insulation plates on the floor base and to spray the polyurethane foam layer onto these insulation plates.

Various other systems are also known in practice for the sound insulation of floors. These systems consist of laying, for example, preformed slabs or polyethylene or polypropylene foam sheets on the base. The disadvantage of the known floor sound insulation systems is that they provide virtually no heat insulation, or only a limited heat insulation, and that a large part of their sound-insulating capacity is lost if the various slabs or sheets are not correctly abutted, so that gaps occur. A further disadvantage is that the base, which is generally not flat because of the presence of conduits, must be filled out (levelled) before the sound insulating material can be laid.

BE-A-1013514 discloses a method by means of which sound insulation is achieved in the floor by placing elastic rubber granules provided with a polyurethane adhesive. These rubber granules are placed in a layer thickness of 0.5 to 3.5 cm. A disadvantage of this known method is again that the sound insulation obtained gives only limited heat insulation. Furthermore, in view of the great specific weight of the rubber granules, a large quantity by weight of material is also required.

The object of the invention is therefore to provide a new method for producing a floor, by means of which the problem of the seams and the necessary levelling of the base can be avoided, which in addition permits not only heat insulation, but also efficient sound insulation, and nevertheless provides the required compression strength for the floor layers resting upon it.

To this end, the method according to the invention is characterized in that a reaction mixture for a polyurethane foam layer is sprayed onto the base, which polyurethane layer has a hardness H, measured in accordance with NBN EN 826 at a compression of 10%, ranging between 5 and 80 kPa and an average thickness in cm ranging between 1.5 x H/16 and 8.0 H/16.

It was found that in practice it is not necessary to provide a hard polyurethane in order to obtain the required compression strength for the floor layers resting upon it, but that this compression strength can also be obtained with a softer polyurethane foam, in particular if the layer thickness remains below the maximum value given above as a function of the hardness of the foam. The advantage of the use of a softer foam is that better sound insulation can be obtained than that with the known harder sprayed foam layers. The foam layer laid by the method according to the invention is in particular a semi-hard, instead of a hard, polyurethane foam layer. It was also found that with the claimed foam thicknesses, an effective heat insulation could also be obtained.

In a preferred embodiment of the method according to the invention the polyurethane foam has a λ value, measured in accordance with the standards EN 1946-3 and EN 12667, which is less than 0.045 W/mK, and which is preferably less than 0.040 W/mK.

On account of the open-cell character of the foam, its λ value will generally be greater than that of the known hard closed-cell polyurethane foams, in particular greater than 0.025W/mK, but the λ value of the softer foams used in this preferred embodiment still permits good heat insulation to be obtained within the limits specified above for the thickness of the polyurethane foam layer.

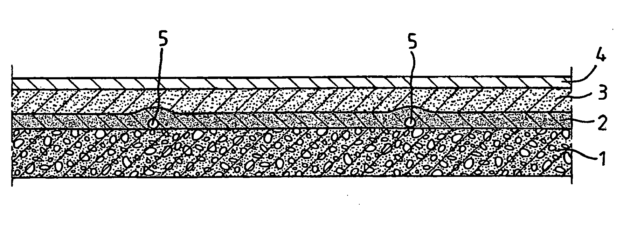

Further advantages and details of the invention will emerge from the description below of an exemplary embodiment of a method for producing a floor according to the invention. This description is, however, given only as an example and is not intended to limit the scope of protection as determined by the claims. The reference numerals given in the description relate to the appended drawings, in which Figure 1 gives diagrammatically a cross section through a floor produced by using the method according to the invention.

The floor construction shown in Figure 1 is a conventional floor construction and consists in succession of a concrete base 1, a polyurethane foam layer 2 sprayed onto said base, a lightweight concrete screed layer 3 and the actual floor 4. Conduits 5 are laid on the concrete base 1. A compressible material, in particular a polyethylene foam, is placed along the walls around the screed layer 3 and the actual floor 4, in such a way that the floor is floating. In practice, the materials described above can be replaced by other materials. The actual floor 4 can be made of, for example, the usual floor tiles, but it can also be made of wood or laminate. Furthermore, the base 1 need not be of concrete, but can also, if desired, be made of, for example, wood or another material, which may itself rest on concrete.

According to the invention, the composition of the polyurethane foam layer 2 is vitally important. The polyurethane reaction mixture sprayed to form this foam layer is more particularly formulated in such a way that the polyurethane foam layer has a hardness H, measured in accordance with NBN EN 826 at a compression of 10%, ranging between 5 and 80 kPa. The average thickness of the foam layer in cm further ranges between 1.5 x H/16 and 8.0 x H/16. For a hardness of 16 kPa the average thickness of the foam layer therefore ranges between 1.5 and 8.0 cm, while for a hardness of 32 kPa the average thickness of the foam layer ranges between 3.0 and 16.0 cm. In view of the fact that the thickness of the foam layer produced by the spraying process is not completely uniform, the average thickness of said foam layer is given here. This average thickness can be determined by measuring the volume and the surface area of the foam layer and dividing the volume by the surface area.

The hardness of the polyurethane foam layer is preferably greater than 7.5 kPa, and more preferably greater than 10 kPa. The advantage of a greater hardness is that the bearing capacity of the polyurethane foam layer is greater, so that said layer can be made thicker in order to increase the heat-insulating capacity in that way. The disadvantage is, however, that the sound-insulating capacity is adversely affected by the greater hardness. The hardness of the polyurethane foam layer is therefore preferably less than 60 kPa, and more preferably less than 40 kPa. The polyurethane foam layer is more specifically a semi-hard polyurethane foam layer. In view of the effect of the hardness of the polyurethane foam layer both on the bearing capacity of that layer and on its sound-insulating capacity, the thickness of the polyurethane foam layer has been given above as a function of the hardness of the foam. In order to obtain better heat and sound insulation, the average thickness of the polyurethane foam layer is preferably greater than 2.0 x H/16, and more preferably greater than 2.5 x H/16. The hardness and the thickness of the polyurethane foam layer are preferably selected in such a way that the floor, in accordance with the standard ENO-ISO 717, falls into category 1 a or 1b, more preferably into category 1a, as regards sound insulation.

Where it is used underneath floating covering floors the deformation on loading of the foam layer is extremely important. In practice various properties are determined for this, including:
- the value (d_{L} - d_{B}) in accordance with DIN 18159, in which d_{L} is the thickness of the test piece at a load of 0.25 kN/m³, and d_{B} is the thickness at a load of 2 kN/m², this being after an initial load of 50 kN/m² for 2 minutes;
- the compressive stress at a compression of 10%; and
- the deformation at a load of 2 kN/m²

Depending on the area of application of the floating covering floor, the value (d_{L} - d_{B}) must, for example, be less than 5 mm, while the deformation at a load of 2 kN/m² must be less than or equal to 3 mm.

According to a preferred embodiment of the invention, the foam layer has an average thickness that is less than 6.0 x H/16 and is more preferably less than 5.0 x H/16, in such a way that the necessary compression strength can be met with a limited hardness.

Unlike the known hard polyurethane foams, the softer, in particular semi-hard polyurethane foam used in the present invention is normally an open-cell polyurethane foam with more than 50% open cells measured in accordance with the standard BS 4370: part 2: 1973. The coefficient of insulation, more particularly the λ value measured in accordance with the standards EN 1946-3 and EN 12667, is greater than that of the hard polyurethane foams, but this λ value is preferably still less than 0.045 W/mK, and more preferably less than 0.040 W/mK. Compared with the sound insulation known from BE-A-1013514 and consisting of agglutinated rubber granules, the polyurethane foam according to the invention provides better heat insulation, in view of the considerably lower density of this foam. In a preferred embodiment of the invention this polyurethane foam has an average density that is less than 100 kg/m³. This average density is preferably less than 75 kg/ m³, and more preferably less than 60 kg/ m³. A lower density not only gives better heat insulation, but also gives a considerable material saving.

For a person skilled in the art of polyurethane chemistry it is clear in what way he must formulate the reaction mixture in order to obtain a polyurethane foam with the properties described above, so that this subject will not be discussed in detail.

In general, it is already known to spray polyurethane foam according to a two-component spraying system, a first component being a so-called polyol component, and the second component being an isocyanate component. For this, reference can be made, for example, to Example 1 from WO93/23237.

The isocyanate component preferably contains MDI (diphenyl-methane diisocyanate), in particular so-called crude MDI. The polyol component contains primarily a polyol with hydrogen-containing groups that are reactive in relation to the isocyanate groups. The polyol is preferably a polyether polyol. In addition to the polyol itself, the polyol component further contains a cross-linker/extender, by means of which the reactivity of the reaction mixture, and in particular also the hardness of the foam obtained, can be influenced. The polyol component further comprises a catalyst and also a blowing medium. The density of the foam can, of course, be regulated by adjusting the quantity of the blowing medium.

### Example

A polyurethane foam layer with the following formulation and with a thickness of 2.5 cm was sprayed:
100 parts of polyol component containing:
   - a polyol with a low hydroxyl number: 89.5 per cent by weight
   - a cross-linker/extender: 5 per cent by weight
   - a blowing medium (water): 3 per cent by weight
   - a catalyst 2.5 per cent by weight
65 parts of isocyanate component consisting of crude MDI.

The polyurethane foam obtained had a density of approximately 50 kg/m³. The following properties were measured:
- Acoustic category determined in accordance with EN-ISO 717: 1 a (i.e. the best category);
- Compression strength or hardness measured in accordance with NBN EN 826: 16.50 kPa at 10% deformation;
- Thermal conductivity or λ value measured in accordance with EN 1946-3 and EN 12667: 0.033 W/mK;
- Ln, w (measured in accordance with EN-ISO 140-6 with prefabricated covering floor): 50 dB;
- K-value: 1.32 W/m²K.
In order to produce a harder foam, the quantity of isocyanate could simply be increased, for example to 75 parts per 100 parts of polyol component.

## Claims

1. Method for producing a floor, in which a polyurethane reaction mixture (2) is sprayed onto a base (1) in order to form a polyurethane foam layer, and a covering floor is laid on this polyurethane foam layer, said covering floor comprising a screed (3) that is laid on the polyurethane foam layer and that is made of at least sand and cement, **characterized in that** said polyurethane foam layer has a hardness H, measured in accordance with NBN EN 826 at a compression of 10%, ranging between 5 and 80 kPa and an average thickness in cm ranging between 1.5 x H/16 and 8.0 H/16.

2. Method according to Claim 1, **characterized in that** said polyurethane foam layer has a hardness H, measured in accordance with NBN EN 826 at a compression of 10%, that is greater than 7.5 kPa, and is preferably greater than 10 kPa.

3. Method according to one of Claims 1 or 2, **characterized in that** said polyurethane foam layer has a hardness H, measured in accordance with NBN EN 826 at a compression of 10%, that is less than 60 kPa, and is preferably less than 40 kPa.

4. Method according to one of Claims 1 to 3, **characterized in that** said polyurethane foam layer is a semi-hard foam layer.

5. Method according to one of Claims 1 to 4, **characterized in that** said polyurethane foam layer is an open-cell polyurethane foam and in particular has an open cell content of more than 50%, measured in accordance with the standard BS 4370: part 2: 1973.

6. Method according to one of Claims 1 to 5, **characterized in that** said polyurethane foam layer has an average thickness in cm that is greater than 2.0 x H/16, and preferably greater than 2.5 x H/16.

7. Method according to one of Claims 1 to 6, **characterized in that** said polyurethane foam layer has an average thickness in cm that is less than 6.0 x H/16, and preferably less than 5.0 x H/16.

8. Method according to one of Claims 1 to 7, **characterized in that** the hardness and the thickness of said polyurethane foam layer are selected in such a way that the floor, in accordance with the ENO-ISO 717 standard, falls into category 1 a or 1b, more preferably into category 1 a, as regards sound insulation.

9. Method according to one of Claims 1 to 8, **characterized in that** the polyurethane foam has a λ value, measured in accordance with the standards EN 1946-3 and EN 12667, which is less than 0.045 W/mK, and which is preferably less than 0.040 W/mK.

10. Method according to one of Claims 1 to 9, **characterized in that** the polyurethane foam has an average density that is less than 100 kg/m³, preferably less than 75 kg/ m³, and more preferably less than 60 kg/ m³.

11. Method according to one of Claims 1 to 10, **characterized in that** the polyurethane reaction mixture is sprayed according to a two-component spraying system, a first component containing a so-called polyol component, in particular a polyether polyol, and the second component containing an isocyanate, in particular MDI (diphenyl-methane diisocyanate).

12. Floor produced by using a method according to one of Claims 1 to 11, comprising a polyurethane foam layer (2) sprayed onto a base (1) and a covering floor laid on this polyurethane foam layer, said covering floor comprising a screed (3) that is laid on the polyurethane foam layer and that is made of at least sand and cement, **characterized in that** said polyurethane foam layer has a hardness H, measured in accordance with NBN EN 826 at a compression of 10%, ranging between 5 and 80 kPa, and an average thickness in cm ranging between 1.5 x H/16 and 8.0 H/16.

## Patentansprüche

1. Verfahren zur Herstellung eines Bodens, in dem eine Polyurethanreaktionsmischung (2) auf eine Unterlage (1) aufgesprüht wird, um eine Polyurethanschaumschicht zu bilden, und ein Bodenbelag auf diese Polyurethanschaumschicht aufbracht wird, wobei dieser Bodenbelag einen Estrich (3) umfasst, der auf die Polyurethanschaumschicht aufgebracht wird und zumindest aus Sand und Zement besteht, **dadurch gekennzeichnet, dass** die erwähnte Polyurethanschaumschicht eine Härte H, gemessen laut NBN EN 826 bei einer Kompression von 10%, von zwischen 5 und 80 kPa und eine durchschnittliche Dicke in cm von zwischen 1,5 x H/16 und 8,0 H/16 hat.

2. Verfahren nach Anspruch 1, **dadurch gekennzeichnet, dass** die erwähnte Polyurethanschaumschicht eine Härte H, gemessen laut NBN EN 826 bei einer Kompression von 10%, hat, die größer als 7,5 kPa und vorzugsweise größer als 10 kPa ist.

3. Verfahren nach einem der Ansprüche 1 oder 2, **dadurch gekennzeichnet, dass** die erwähnte Polyurethanschaumschicht eine Härte H, gemessen laut NBN EN 826 bei einer Kompression von 10%, hat, die geringer als 60 kPa und vorzugsweise geringer als 40 kPa ist.

4. Verfahren nach einem der Ansprüche 1 bis 3, **dadurch gekennzeichnet, dass** die erwähnte Polyurethanschaumschicht eine halb harte Schaumschicht ist.

5. Verfahren nach einem der Ansprüche 1 bis 4, **dadurch gekennzeichnet, dass** die erwähnte Polyurethanschaumschicht ein offenzelliger Polyurethanschaum ist und insbesondere einen offenzelligen Gehalt von mehr als 50% hat, gemessen laut der Norm BS 4370: Teil 2: 1973.

6. Verfahren nach einem der Ansprüche 1 bis 5, **dadurch gekennzeichnet, dass** die erwähnte Polyurethanschaumschicht eine durchschnittliche Dicke in cm hat, die größer als 2,0 x H/16 und vorzugsweise größer als 2,5 x H/16 ist.

7. Verfahren nach einem der Ansprüche 1 bis 6, **dadurch gekennzeichnet, dass** die erwähnte Polyurethanschaumschicht eine durchschnittliche Dicke in cm hat, die geringer als 6,0 x H/16 und vorzugsweise geringer als 5,0 x H/16 ist.

8. Verfahren nach einem der Ansprüche 1 bis 7, **dadurch gekennzeichnet, dass** die Härte und die Dicke der erwähnten Polyurethanschaumschicht so ausgewählt sind, dass der Boden, laut der Norm ENO-ISO 717, in Bezug auf Schalldämmung in die Kategorie 1a oder 1 b, vorzugsweise in Kategorie 1a fällt.

9. Verfahren nach einem der Ansprüche 1 bis 8, **dadurch gekennzeichnet, dass** der Polyurethanschaum einen Wert λ, gemessen laut den Normen EN 1946-3 und EN 12667, hat, der geringer als 0,045 W/mK und vorzugsweise geringer als 0,040 W/mK ist.

10. Verfahren nach einem der Ansprüche 1 bis 9, **dadurch gekennzeichnet, dass** der Polyurethanschaum eine durchschnittliche Dichte hat, die geringer als 100 kg/m³, vorzugsweise geringer als 75 kg/m³ und am besten geringer als 60 kg/m³ ist.

11. Verfahren nach einem der Ansprüche 1 bis 10, **dadurch gekennzeichnet, dass** die Polyurethanreaktionsmischung nach einem Zweikomponentensprühsystem aufgebracht wird, wobei eine erste Komponente eine so genannte Polyol-Komponente, insbesondere ein Polyether-Polyol, und die zweite Komponente ein Isocyanat, insbesondere MDI (Diphenylmethandiisocyanat) enthält.

12. Boden hergestellt nach einem Verfahren nach einem der Ansprüche 1 bis 11, der eine Polyurethanschaumschicht (2) auf einer Unterlage (1) und einen auf diese Polyurethanschaumschicht aufgebrachten Bodenbelag umfasst, wobei der erwähnte Bodenbelag einen Estrich (3) umfasst, der auf die Polyurethanschaumschicht aufgebracht ist und zumindest aus Sand und Zement besteht, **dadurch gekennzeichnet, dass** die erwähnte Polyurethanschaumschicht eine Härte H, gemessen laut NBN EN 826 bei einer Kompression von 10%, von zwischen 5 und 80 kPa und eine durchschnittliche Dicke in cm von zwischen 1,5 x H/16 und 8,0 H/16 hat.

## Revendications

1. Procédé de réalisation d'un sol, dans lequel un mélange de réaction de polyuréthane (2) est pulvérisé sur une base (1) afin de former une couche de mousse de polyuréthane, et un sol de couverture est posé sur cette couche de mousse de polyuréthane, ledit sol de couverture comprenant une chape (3) qui est posée sur la couche de mousse de polyuréthane et qui est faite d'au moins du sable et du ciment, **caractérisé en ce que** ladite couche de mousse de polyuréthane a une dureté H, mesurée selon NBN EN 826 à une compression de 10 %, comprise entre 5 et 80 kPa et une épaisseur moyenne en cm comprise entre 1,5 x H / 16 et 8,0 H / 16.

2. Procédé selon la revendication 1, **caractérisé en ce que** ladite couche de mousse de polyuréthane a une dureté H, mesurée selon NBN EN 826 à une compression de 10 %, qui est supérieure à 7,5 kPa, et est de préférence supérieure à 10 kPa.

3. Procédé selon la revendication 1 ou 2, **caractérisé en ce que** ladite couche de mousse de polyuréthane a une dureté H, mesurée selon NBN EN 826 à une compression de 10 %, qui est inférieure à 60 kPa, et est de préférence inférieure à 40 kPa.

4. Procédé selon l'une des revendications 1 à 3, **caractérisé en ce que** ladite couche de mousse de polyuréthane est une couche de mousse semi dure.

5. Procédé selon l'une des revendications 1 à 4, **caractérisé en ce que** ladite couche de mousse de polyuréthane est une mousse de polyuréthane à alvéoles ouvertes et, en particulier, a une teneur en alvéoles ouvertes de plus de 50 %, mesurée conformément à la norme BS 4370, partie 2, 1973.

6. Procédé selon l'une des revendications 1 à 5, **caractérisé en ce que** ladite couche de mousse de polyuréthane a une épaisseur moyenne en cm qui est supérieure à 2,0 x H / 16, et de préférence supérieure à 2,5 x H / 16.

7. Procédé selon l'une des revendications 1 à 6, **caractérisé en ce que** ladite couche de mousse de polyuréthane a une épaisseur moyenne en cm qui est inférieure à 6,0 x H / 16, et de préférence inférieure à 5,0 x H / 16.

8. Procédé selon l'une des revendications 1 à 7, **caractérisé en ce que** la dureté et l'épaisseur de ladite couche de mousse de polyuréthane sont choisies de telle manière que le sol, conformément à la norme ENO-ISO 717, rentre dans la catégorie 1a ou 1b, plus préférablement dans la catégorie 1 a, pour ce qui est de l'isolation acoustique.

9. Procédé selon l'une des revendications 1 à 8, **caractérisé en ce que** la mousse de polyuréthane a une valeur λ, mesurée conformément aux normes EN 1946-3 et EN 12667, qui est inférieure à 0,045 W / mK, et qui est de préférence inférieure à 0,040 W/mK.

10. Procédé selon l'une des revendications 1 à 9, **caractérisé en ce que** la mousse de polyuréthane a une densité moyenne qui est inférieure à 100 kg / m³, de préférence inférieure à 75 kg / m³, et plus préférablement inférieure à 60 kg / m³.

11. Procédé selon l'une des revendications 1 à 10, **caractérisé en ce que** le mélange de réaction de polyuréthane est pulvérisé selon un système de pluvérisation à deux composants, un premier composant contenant un composant dit polyol, en particulier un polyol polyéther, et le deuxième composant contenant un isocyanate, en particulier du MDI (diisocyanate de diphénylméthane).

12. Sol produit en utilisant un procédé selon l'une des revendications 1 à 11, comprenant une couche de mousse de polyuréthane (2) pulvérisée sur une base (1) et un sol de couverture posé sur cette couche de mousse de polyuréthane, ledit sol de couverture comprenant une chape (3) qui est posée sur la couche en mousse de polyuréthane et qui est faite d'au moins du sable et du ciment, **caractérisé en ce que** ladite couche de mousse de polyuréthane a une dureté H, mesurée selon NBN EN 826 à une compression de 10 %, comprise entre 5 et 80 kPa et une épaisseur moyenne en cm comprise entre 1,5 x H / 16 et 8,0 H / 16.
